# EUROPEAN PATENT SPECIFICATION

(11) **EP 1 337 156 B1**
(45) Date of publication and mention of the grant of the patent: **16.01.2008**
(21) Application number: 01990403.6
(22) Date of filing: 07.11.2001
(51) Int. Cl.: A23G 3/20, A23G 3/54, A23P 1/08

(54) **PROCESS FOR MOLDING LAMINATED CANDY AND RESULTANT PRODUCTS THEREOF**
VERFAHREN ZUM FORMEN VON SCHICHTBONBONS, UND NACH DIESEM VERFAHREN ERHALTENE PRODUKTE
PROCEDE DE MOULAGE D'UN BONBON STRATIFIE ET PRODUITS OBTENUS SELON LEDIT PROCEDE

(30) Priority: 15.11.2000 US 712265; 27.08.2001 US 939892
(43) Date of publication of application: 27.08.2003
(73) Proprietor: Société des Produits Nestlé S.A., 1800 Vevey (CH)
(72) Inventor: ZERBY, Christine, Marengo, OH 43334 (US); MAKELA, Brian, Dublin, OH 43017 (US); MAC DONALD, Ronald, Paul, Duffell, Marysville, OH 43040-9210 (US)
(74) Representative: Thomas, Alain
(86) International application number: PCT/EP2001/013048
(87) International publication number: WO 2002/039823

(56) References cited:
- EP-A- 0 653 285
- EP-A- 0 808 576
- EP-A- 1 057 413
- WO-A-00/60959
- WO-A-94/02027
- US-A- 3 821 452
- US-A- 4 113 819
- US-A- 4 648 316
- US-A- 4 648 821
- US-A- 4 858 524
- US-A- 4 932 317
- US-A- 5 000 969
- US-A- 5 194 283
- US-A- 5 792 500

## Description

### TECHNICAL FIELD

The present invention relates to methods of extruding or molding candy products having a laminated structure with a desired texture and the resultant candy products having a sticky or flowable mass therein.

### BACKGROUND ART

In view of the large amount of candy consumed by consumers, there is always an interest in providing new, different, and unusual candies. A popular type of candy is laminated candy products. These candy products consist of many layers of alternating materials. The texture of the candy product is a result of the laminated structure and the materials used to form the laminated structure. Typically, laminated candy products consist of layers of hard candy and a fatty paste or fluid such as peanut butter, which is then coated with chocolate or other coating. A candy product with a laminated structure of hard candy and a fatty paste or fluid generally has a crunchy texture.

The conventional process for producing a laminated product of hard candy and a fatty paste or fluid product involves heating candy syrup in a precooker to form a candy mass and boiling the resulting candy mass to produce a viscous material having a low moisture content. Typically, the moisture content is about 4-5%. The resulting boiled candy mass is discharged from the cooker and passed through an aeration screw to aerate the candy mass. The aerated candy mass is then placed on a steel tempering band which cools the candy mass to a specified temperature such that the candy mass remains pliable. The aerated candy mass is then sheeted and the candy sheet is coated with a layer of fatty paste. The layer of fatty paste and aerated candy may be sprinkled with rework prepared from reusable products from previous candy bar forming operations. Alternatively, the candy sheet can be sprinkled with rework before it is coated with the fatty paste or the candy sheet can be coated with a mixture of fatty paste and rework. The layer of candy mass and fatty paste is then rolled onto itself to give a thicker candy mass with more layers. The plastic mass is then sheeted and cut into individual bars. The whole system is continuous. The resulting candy bar centers can be coated with chocolate or other coatings to produce the final candy product. An example of this process is disclosed in U.S. Patent Nos. 4,679,496, 4,778,685 and 4,858,524. Due to the rolling, it is only possible to prepare laminated candy products wherein one of the materials is a hard candy. If one of the materials is not a hard candy mass the two materials would simply flow together when they are rolled and a laminated structure would not be obtained.

U.S. Patent No. 5,437,879 discloses a multi-layered chewing gum gel cream confection. The multi-layered chewing gum comprises at least two separate layers of a chewing gum composition and at least one layer of a hydrophilic confectionery gel cream sandwiched between the at least two separate layers of a chewing gum composition.

U.S. Patent No. 4,911,937 discloses a chewable, peelable nougat candy comprising at least two layers of nougat wherein each layer of nougat is separable from the adjacent nougat layer by the interposition of a compound coating.

UK Patent Application No. 2 283 699 discloses a method of coextruding multi-layered food products. The food products may be jam, truffle, fondant, caramel, toffee, blancmange, marshmallow, aerated chocolate, batter, fat creams, pumpable pastes, and pumpable sauces. The food products are coextruded through different channels arranged side by side one after the other to define a column of channels.

U.S. Patent 4,542,028 discloses a composite frozen confection comprising a multiplicity of superimposed extruded layers of extrudable confectionery material. Thin layers of a second confectionery material such as a fat based confection material are interleaved between layers of a frozen aerated confectionery such as ice cream.

U.S. Patent No. 4,651,635 discloses an apparatus for making multi-layered folded pastries.

U.S. Patent No. 5,500,234 discloses a crispy multi-layered cookie or sandwich like product wherein intermediate filler material may be used between the outer crispy or cookie layers without degradation of the crispiness of the outer layers.

Canadian Patent Application No. 2,187,940 discloses a multilayer dessert comprising at least one heat treated component of mousse, cream, jelly, and/or sauce that is coated with a continuous sterilized layer of fat coating or chocolate.

From D2: US-5,000,696 a frozen confectionary is known, which comprises strips of ice cream encased in chocolate layered upon each other.

There is a need, however, for new laminated candy products that have unique texture and mouth feel and provide a unique eating sensation. In particular, it is desired to be able to prepare a non-refrigerated laminated candy product having a flowable or sticky mass therein, particularly one that has a reduced or eliminated tendency to stick to its packaging.

### SUMMARY OF THE INVENTION

The present invention relates to a non-refrigerated laminated edible product comprising a plurality of strips layered upon each other, wherein each strip comprises at least one first fluid material interleaved between at least two layers of a second, different fluid material which completely surrounds the first fluid material, wherein the second fluid material flows at one temperature but solidifies at a lower temperature and neither the first fluid material nor the second fluid material is a hard candy mass. In one embodiment at least some of the strips comprise a single first fluid material encased within a second fluid material. The first fluid material in the strip may have a variable thickness or a plurality of first fluid materials may be provided between the layers of the second fluid material.

In another embodiment a plurality of first fluid materials are provided between the layers of second fluid material. The plurality of strips may be layered upon each other to form the product and, in one embodiment, the strips may be layered upon each other at an angle to form the edible product.

The invention also relates to a method of producing a non-refrigerated laminated edible product comprising depositing in each of a plurality of molds a first plurality of layers of at least one first fluid material interleaved between a second plurality of layers of a second fluid material that flows at one temperature but solidifies at a lower temperature, and coating a portion of the first and second plurality of layers in each mold with an edible material to form the non-refrigerated laminated edible product.

One of the beneficial features of this embodiment of the invention is that neither the first fluid material nor the second fluid material of the non-refrigerated laminated edible product is a hard candy mass. Preferably, at least one of the first fluid material and the second fluid material has a moisture content of greater than about 7 percent by weight. The second fluid material advantageously comprises a fat-based confectionery material, sugar based confectionery paste, or both.

If desired, the edible material can be the second fluid material. In this embodiment, the second fluid material can be chocolate, a compound coating, or both.

Thus, when the edible material is at least one chocolate, it can be arranged so that it completely surrounds and encapsulates the first fluid material, thus preventing the first fluid material from coming in contact with the packaging material for the product. This enables the first fluid material to be a relatively sticky material such as jelly, and yet the product will not stick to a wrapper under ambient conditions. This is facilitated by selecting the second fluid material to be one that solidifies at a temperature of about 30°C.

Yet another embodiment of the invention relates to a non-refrigerated laminated edible product comprising a plurality of strips layered upon each other, wherein each strip comprises at least one first fluid material comprising a sticky or flowable mass having a moisture content of at least about 7 weight percent; and at least two layers of a second, different fluid material which completely surrounds and encases the first fluid material, wherein the first fluid material is interleaved between the at least two layers of the second fluid, which second fluid flows at one temperature but solidifies at a lower temperature. Again, the invention is designed so that it can include a wide variety of confectionery materials, but where neither the first fluid material nor the second fluid material is a hard candy mass.

The sticky or flowable mass can be any one of jelly, caramel, fondant, paste, liquid, or a combination thereof. In one embodiment, this mass has a low viscosity, i.e. a greater moisture content or a reduced solids content. The jelly is preferably a pectin-based jelly. Also, at least one of the first or second fluid materials comprises one or more inclusions. Typical inclusions comprise cereals, grains, nuts, fruit pieces, jelly pieces, wafer, cookie, biscuit, candy, or combinations thereof, and they have a preferred size of about 0.5mm to 6.5mm (0.02 inches to 0.25 inches).

Also, the first and second layers in the product can be superimposed upon each other or may disposed at any angle relative to each other to provide designs in the final product. These strips may have a thickness of about 0.254mm and 3.2mm (1/100 inch to 1/8 inch), and advantageously, about 2 to 500 strips are superimposed to form the product and the moisture content is greater than about 8 weight percent. The layer of superimposed strips preferably has an overall thickness of about 0.254mm to 101.6mm (0.01 to 4 inches). Another and advantageous embodiment of the non-refrigerated laminated edible product of the invention comprises a plurality of strips layered upon each other, wherein each strip comprises at least one first fluid material comprising a sticky or flowable mass having a Brix content of less than about 83°; and at least two layers of second, different fluid material which completely surrounds and encases the first fluid material,. The first fluid material is interleaved between the at least two layers of the second fluid, which second fluid flows at one temperature but solidifies at a lower temperature, As above, neither the first fluid material nor the second fluid material is a hard candy mass.

Preferably, the Brix content is less than about 78°.

### DETAILED DESCRIPTION OF THE PREFERRED EMBODIMENTS

The present invention is directed to a non-refrigerated laminated edible product wherein a strip of at least one first fluid material encased in a layer of a second fluid material is layered on top of itself. The non-refrigerated laminated edible product of this embodiment consists of many thin layers of alternating materials, wherein neither material is a hard candy mass.

The present invention also relates to a non-refrigerated laminated edible product including a plurality of strips layered upon each other, wherein each strip comprises at least one first fluid material interleaved between at least two layers of a second, different fluid material which completely surrounds the first fluid material, wherein the second fluid material flows at one temperature but solidifies at a lower temperature and neither the first fluid material nor the second fluid material is a hard candy mass. In this embodiment, at least some of the strips comprise a single first fluid material encased within a second fluid material, where the first fluid material in the strip may have a variable thickness. The non-refrigerated laminated edible product can include many thin layers of alternating materials, wherein neither material is a hard candy mass. The strips may be layered upon each other at an angle to form the edible product.

One drawback to mass lamination is that the paste must set up fairly promptly after formation or it will flow out of the layers and produce a more messy appearing product or one that has less of the paste than desired. It has now been discovered that when the non-refrigerated laminated product is molded it can advantageously include a first material, such as the paste, having significantly lower viscosity because the coating or second material contains the first material within the mold until the product is set properly.

By "strip" is meant one or more fluid materials that are simultaneously discharged from a coaxial die to form a product stream wherein one or more first fluid materials is encased between a second fluid material. Preferably, the one or more first fluid materials is completely surrounded by the second fluid material. The second fluid material completely surrounding the first fluid material (s) is accomplished by using a coaxial die with two or more concentric oval shaped exit ports, wherein the inner exit ports discharge the one or more first fluid material (s) and the outer exit port discharges the second fluid material. By having the second fluid material completely surround the first fluid material advantageously improves the integrity of the laminated structure by reducing the ability of the first fluid material to ooze or flow out of the laminated structure. Indeed, by having the second fluid material completely surround the first fluid material it is possible to make laminated structures with materials that previously could not be combined to form a laminated structure.

In the non-refrigerated laminated edible product of the invention the first fluid material and the second fluid are either a fat based confectionery coating or a sugar based confectionery paste. Preferably, the first fluid material and the second fluid material are different. More preferably, the first and second fluid material are visually or texturally distinguishable, or both.

The second fluid material can be a fluid at one temperature and a solid at a lower temperature. In this embodiment, the second fluid material is a solid at temperatures of less than about 30°C. In the non-refrigerated laminated edible products, the laminated structure is maintained in the final product preferably without having to refrigerate the final product.

Furthermore, it is typically unnecessary to form the laminated structure in a cup or other container or to keep the final laminated product in a cup or other container to maintain the laminated shape. Preferably, the layers of the laminated structure are not separable.

By "fat based confectionery coating" is meant a chocolate or a compound coating.

The term "chocolate" as used herein means any confectionery product having qualities sufficient to impart chocolate taste and character. Suitable chocolates include, but are not limited to, sweet chocolate, milk chocolate, buttermilk chocolate, bittersweet chocolate and chocolates as defined in 21 C. F.R. 163. Chocolate also includes other materials, such as compound coatings, that have a chocolate flavor and perform as a chocolate analogue or a chocolate substitute.

The term "compound coating" as used herein means any confectionery product based on vegetable fat. In addition to vegetable fat the confectionery coatings typically contain sugar; flavorings such as cocoa solids, peanut solids, and other natural or artificial flavors; emulsifiers; coloring agents; and optionally milk solids. As noted above, some compound coatings closely resemble true chocolate, dark or milk. Other compound coatings, made from cocoa powder, non-fat milk powder, sugar, and one of the many vegetable fats, may have an appearance resembling dark or milk chocolate, but a texture that is quite different. Compound coatings also include pastel coatings, which have no cocoa powder and have added colors and flavors. The compound coating can have a variety of flavors including, but not limited to, maple, chocolate, vanilla, peanut butter and butterscotch.

By "sugar based confectionery paste" is meant a sugar based candy that has a higher moisture content than a hard candy. Typically, the moisture content of a sugar based confectionery is more than about 7 percent, preferably more than about 10 percent. Sugar based confectionery pastes do not include cookies and cakes.

By "hard candy mass" is meant any hard candy product having a moisture content of about 3 to 5 percent by weight and which is produced by methods known to those of ordinary skill in the art.

Several examples of materials that can be combined to provide a laminated structure are provided below. In one embodiment the first (second) fluid material is a chocolate or compound coating and the second (first) fluid material is a jelly, nougat, fondant, nut paste, coconut paste, chocolate paste, fat cream or melt-away, caramel, fudge, flour based paste, cookie dough substitute, marshmallow, or a liquid. Preferably, the second fluid material is a chocolate or compound coating. For examlple, the first and second fluid materials can respectively include white chocolate or coating and jelly, such as raspberry or strawberry.

The term 'jelly" as used herein means a sugar and starch based composition having a gummy texture. Typically jellies include pectin. A representative jelly recipe is to combine about 35.5 parts water, about 1.65 parts pectin, about 48.5 parts sugar, about 29.5 parts glucose syrup, about 0.75 parts 50% citric acid solution, and coloring and flavoring and then to boil the resulting mixture until a final solids content of about 75 percent is obtained.

The term "fondant" as used herein means a composition based on sugar, glucose syrup, and possibly invert sugar that has a creamy texture. A representative fondant recipe is to combine about 3.6 kg sugar (8 lbs), about 1 kg (2.2 lbs) glucose syrup, and about 1.27 kg (2.8 lbs) water to provide a mixture and to then cook the mixture at about 240°C to 250°C, preferably about 248°C to a solids content of about 80 to 90 percent, preferably about 88 percent

The term "nougat" as used herein is a composition, similar to a fondant in that it is based on sugar, but further comprises whipped eggs for a lighter texture, the mixture being whipped to a frappe. A representative nougat recipe is to dissolve about 0.11 kg (0.25 lbs) egg albumen in about 14 kg (31 lbs) water and add about 23 kg (51 lbs) icing sugar to provide a mixture and beat the mixture at high speed with a wire whisk to provide a whip. Separately, about 5.9 kg (13 lbs) sugar is dissolved in about 18,6 kg (41 lbs) of water followed by about 9.1 kg (20 lbs) of glucose syrup and the mixture boiled at about 260°C to provide a syrup. The syrup is then added in thin streams to the whip with continuous whipping at low speed with a flat beater. Optionally, one or more of about 0.91 kg (2 lbs) cocoa powder, about 0.91 kg (2 lbs) malt powder, about 0.7 kg (1,5 lbs) nonfat milk powder, or about 0.7 kg (1.5 lbs) icing sugar may be added and gradually stirred into the mixture of whip and syrup. About 5 kg (11 lbs) fat is then melted at low temperature and added to the mixture with slow mixing for the minimum amount of time needed to disperse the fat. The resulting mixture can then be pumped while hot and cooled as part of the laminated mass.

The term "nut paste" as used herein means ground or chopped nuts that are made into a paste. Any type of nuts may be used including but not limited to almonds (marzipan), pecans, hazelnuts, walnuts, and peanuts. The term "coconut paste" as used herein means a cream made of either toasted or fresh coconut.

The term "fat cream" or "melt-away" as used herein means a fat based cream. The term " cream" as used herein means a base for a fondant comprised of sugar, glucose, and invert sugar. Adding fat to the base provides a "fat cream". Typically, the fat content of the fat cream or melt-away is from about 15 to 35 percent, preferably from about 20 to 30 percent, and more preferably.from about 24 to 27 percent. Optionally, colors and flavors may be added to the fat cream.

The term "caramel" as used herein means a caramelized sugar optionally containing milk and/or butter-to provide a soft, medium, or hard texture. A representative caramel recipe is to combine about 2.95 kg (6.5 lbs) water, about 4.54 kg (10 lbs) white granulated sugar, about 4.54 kg (10 1bs) brown sugar, about 7.7 kg (17 lbs) glucose, about 8.2 kg (18 lbs) full fattened sweetened condensed milk, about 3.6 kg (8 lbs) hardened vegetable fat, about 0.23 kg (8 oz) glyceryl monostearate, and about 0.14 kg (5 oz) salt to provide a mixture and to then boil the mixture to the desired moisture content to provide a soft, medium or hard caramel. A soft caramel is typically prepared by cooking at a temperature of about 118°C to 120°C (245°F to 248°F) to a water content of about 9 to 10 percent. A medium caramel is typically prepared by cooking at a temperature of about 121°C to 124°C (250°F to 255°F) to a water content of about 7 to 8 percent. A hard caramel is typically prepared by cooking at a temperature of about 128°C to 130.5°C (262°F to 267°F) to a water content of about 5 to 6 percent.

The term "fudge" as used herein means a caramel with the sugar being in the crystalline state and having a grainy and short texture. The recipe for a fudge is the same as the recipe for a caramel except that a fondant is added to the caramel to seed and initiate a crystallization process. Crystallization can also be initiated by agitation of the caramel while cooling. Crystallization involves the formation of sugar crystals during cooling, which can be regulated and controlled to obtain the desired size of crystals and is important in determining the textural characteristic of the final fudge product. The flavor and texture of the fudge are determined by the degree of boiling of the original caramel base and the amount of the fondant added to the grain the mass.

The term "liquid" as used herein can be any type of flowable liquid such as a cordial or fruit juice.

The term "flour based paste" as used herein means a paste, comprised of flour, sugar, oil, and water. Any type of flour can be used including, but not limited to, wheat, oat, rice, and soy flour. Any type of oil can be used including, but not limited to, coconut oil, peanut oil, vegetable oil, and coconut oil.

The term "cookie dough substitute" as used herein means a shelf stable, dairy free, egg free dough that resembles a regular cookie dough, but does not have to be refrigerated or baked. The term "shelf stable" as used herein means the product does not require any refrigeration and can be stored at room temperature with substantially no spoilage or microbiological growth.

Preferably, the first and second fluid materials do not include flour. When the first or second fluid material does contain flour, however, the product does not require cooking before being eaten and is shelf stable. Thus, the products of the invention are completely different from flour based confectionery products such as dough containing products that require cooking and are not shelf stable. Furthermore, the products of the invention are unlike dough containing products as they do not include flour in combination with eggs.

The term "marshmallow" as used herein is a sugar based, egg whipped, aerated confection well known to those of ordinary skill in the art.

Recipes for preparing a jelly, nougat, fondant, nut paste, coconut paste, chocolate paste, fat cream or melt-away, caramel, fudge, flour based paste, cookie dough substitute, marshmallow, or a liquid are well known to those of ordinary skill in the art and need not be further described herein *(See, e.g.,* "Chocolate, Cocoa, and Confectionery Science and Technology," 3rd ed., Bernard W. Minifie, Aspen Publishing (1999)).

The first or second fluid material may also include one or more flavonngs or colorings. Any flavoring or coloring can be used. The flavoring or coloring can be natural or artificial. One or ordinary skill in the art would readily be able to select suitable colorings or flavorings without undue experimentation.

The first or second fluid material may optionally contain one or more inclusions. Any type of inclusion can be used including, but not limited to, cereals and grains, similar to breakfast cereal but smaller in size, including oats, puffed rice, and puffed wheat; nuts that are either whole, chopped, or ground; pieces of fruit; jelly pieces; pieces of wafers, cookies, or biscuits; candy pieces such as morsels of butterscotch, chocolate, hard candy, and gummies; or mixtures thereof. Typically, the pieces have dimensions that are from about 0.5mm to 6.5mm (0.02 inches to 0.250 inches), preferably about 1mm to 4.4mm (0.04 inches to 0.175 inches), more preferably from about 1.5mm to 3.175mm (0.06 inches to 0.125 inches). The inclusions may be combined with the first or second fluid materials, or both, either before or after it is extruded or molded. In another embodiment, the strip may be extruded directly onto inclusions that are layered on a belt or the inclusions may be sprinkled on top of the strip after it is extruded,

In one embodiment, the first and second fluid materials are deposited sequentially from separate nozzles into a mold. Alternatively, a coextrusion nozzle is used to codeposit the at least first and second fluid materials into a mold. The first fluid material or the second fluid material, or both, may also include one or more colorings or flavorings in any of these embodiments. Also, inclusions may be present in either fluid material, or both, in any of these embodiments.

The laminated structure may also be prepared by successively layering the strip on top of itself. Alternatively, the laminated structure can be prepared by aligning a plurality of coaxial dies parallel to each other and perpendicular to the movement of a conveyor belt and extruding the first and second fluid materials through each coaxial die onto the conveyor belt so that the extruded mass laminates on itself. In this embodiment of forming the laminated structure it is possible to form a laminated structure that is distorted and does not have a regular shape and provides a novel appearance.

Preferably, the plurality of coaxial dies comprises from about 2 to 7 coaxial dies and more preferably from about 3 to 5 coaxial dies.

The thickness of the strips can be varied by varying the distance between the coaxial die assembly and the conveyor belt and potentially by oscillating the die. The thickness of the strips may be from about 0.254mm and 3.2mm (1/100 inch to 1/8 inch). Preferably, the thickness of the strips is from about 0.5mm to 2.54mm (1/50 inch to 1/10 inch). In one preferred embodiment, the thickness of the strips is about 1.27mm to 2.54mm (1/20 inch to 1/10 inch). In addition, the thickness of the resulting stack (i.e., the number of layers of center-filled strips) can also be varied. The number of strips in the stack may vary from about 2 strips to 500 strips. Preferably the number of strips in the stack varies from about 10 strips to 300 strips, and in one preferred embodiment, from about 20 strips to 100 strips. As explained herein, each strip comprises three layers, *i.e.,* at least one first fluid material encased in a layer of a second fluid material. The thickness of the stack may vary from about 0,254mm to 101.6mm (1/100 inch to 4 inches). Preferably the thickness of the stack is from about 9.5mm to 25.4mm (0.375 inches to 1 inch). The texture of the laminated structure is determined, in part, by the number of layers and the thickness of the layers.

When extruding a first fluid material encased in a second fluid material wherein neither of the fluid materials is a liquid or plastic candy mass the first and second fluid materials may be at the same temperature or a different temperatures. For example, if the first fluid material is a sugar based confectionery paste and the second fluid material is a compound coating the first fluid material may be cooler than the second fluid material so that the first fluid material cools the "second fluid material so that the second fluid material sets and assures the integrity of the laminated structure. The temperature difference between the first fluid material and the second fluid material is product specific and can vary over a wide range depending on the characteristics of the first fluid material and the second fluid material. The temperature difference can be in excess of 105°C (220°F). Typically, the temperature difference is less than about 25°C (50°F). For example, if a sugar based paste and a compound coating are laminated the sugar based paste is typically at a temperature of about 13°C to 15.5°C (55°F to 60°F) and the compound coating is at a temperature of about 35°C to 38°C (95°F to 100°F). A higher temperature for one of the fluid materials may be needed so that the material can be extruded. If the temperature difference is too large, however, the materials may mix or run together (this can happen for example when the first and second fluid materials are a chocolate and a nut paste) or there may be a decrease in viscosity that causes thinner layers to be formed. One of ordinary skill in the art will be able to readily determine the temperature of the first and second fluid materials without undue experimentation.

The second fluid material may solidify at a temperature of less than about 30°C. The first and second fluid materials may each be a fat based confectionery coating or a sugar based confectionery paste, or both. In one embodiment, the second fluid material is a fat based confectionery coating. The second fluid material may include chocolate, for example. The first fluid material may include jelly, nougat, fondant, nut paste, chocolate paste, fat cream, caramel, fudge, flour based paste, cookie dough, marshmallow, a liquid, or a combination thereof.

In one preferred embodiment, the first and second fluid materials, along with any other coloring agents, inclusions, or the like, are coextruded into a mold, preferably into a plurality of molds. This depositing can be either sequential or concurrent, but it is preferably concurrent in a plurality of molds. The molds can simplify processing, such as for low viscosity first fluid materials, by inhibiting or avoiding the flow of laminate materials away from the candy product., Thus, the molds can help the laminated candy product retain a suitable shape until the interleaved first and second fluid materials can be encapsulated or surrounded by the second fluid material or edible coating. This embodiment permits the first fluid material to have a low viscosity.

In one embodiment, the viscosity of the first fluid material is fairly low, as determined by Brix content (solids content) or moisture content. This low viscosity can be present in the first fluid material even after the product is sufficiently cooled and solidified to ambient conditions. The low viscosity can be measured in terms of moisture content, where the first fluid material can have a moisture content of about 5 to 12 weight percent moisture, preferably about 7 to 10 weight percent moisture; In one such preferred embodiment, the moisture content is from about 8 to 10 weight percent. For example, soft caramels have moisture contents that are typically greater than about 7 weight percent.

Other particularly suitable soft materials having high moisture content and low viscosity include certain fondants, creams, ganaches, and even ice cream. In another embodiment, the viscosity can be measured in terms of solids content, or Brix. Thus, the first fluid material can have a Brix content of about 60° to 88°, preferably about 60° to 83°. In one preferred embodiment, the Brix content of the first fluid material is, about 70° to 82°, while in another preferred embodiment the Brix content is about 75° to 80°.

An exemplary first fluid material would include a soft jelly having a Brix content of about 76° to 78°.

The mold inhibits or avoids flow and spillage problems that can arise when conducting the coextruding embodiment described herein. The resulting laminated candy product has the low viscosity first fluid material at least substantially completely contained within the second fluid material or the coating. The molded, laminated product can be of any suitable size.

One preferred laminated, edible product has a length of about 5 cm to 30 cm, preferably about 10 cm to 20 cm, and more preferably about 12 cm to 15 cm; a height of about 0.5 cm to 1.5 cm, and preferably about 0.75 cm to 1.25 cm; and a width that is about 1 cm to 6 cm, preferably about 2 cm to 4 cm, and more preferably 2.5 cm to 3.5 cm, An exemplary product dimension is one having a 13 cm length, a 3 cm base width tapered to a 2.5 cm top width, and a 1 cm height. Another preferred laminated edible product includes a snack cup, or a plurality of snack cups releasably attached to each other, *e.g*., in a six-pack. Alternatively, the laminated edible product can be in the form of other types of single serving food products. In one preferred embodiment, the laminated, edible product is packaged in a transparent container to facilitate the consumer view of the visual appeal present in laminated, edible products prepared according to the invention.

In this embodiment, the laminate preferably has 5 to 9 layers and can include softer, less viscous materials when using molding than with the basic co-extrusion embodiment. Molding can minimize or preferably avoid the need to cut candy pieces, since the molds can be shaped to a desired size. The mold embodiment tends to help the candy retain its freshness because the inner materials, *i.e.,* the first and second fluid materials, are encapsulated within the laminated candy. The use of first fluid materials having a lower viscosity, *e.g.,* a paste, typically will not flow out of the bar because the mold inhibits or prevents such flow problems that can occur when the co-extrusion bars are chopped.

According to another embodiment of the invention, the at least one first fluid material can be a mixture of two or more first fluid materials, In yet another embodiment the two or more first fluid materials are not extruded as a mixture but are extruded so that each of the first fluid materials are layered on top of the other first fluid material(s) to form a multi-layered strip of first fluid material encased in the second fluid material. In yet another embodiment of the invention the at least one first fluid material is more than one fluid material that is extruded to form a. single layer of first fluid materials encased in the second fluid material and wherein each first fluid material is adjacent to another first fluid material. Based on the disclosure herein, one of ordinary skill in the art will be able to readily modify the coaxial die assembly so as to produce multi-layered first fluid materials or to produce a single layer of first fluid materials wherein first fluid materials are adjacent to each other.

The novel laminated structures prepared by the process of the invention have a unique appearance. For example, each layer of the laminated structure may be a different color. For example, the laminated structure might comprise a mint fondant and a dark chocolate to provide a "zebra stripe" appearance. Moreover, since the laminated structures comprise materials that previously could not be laminated, the laminated structures have a unique texture and mouthfeel. The laminate of the present invention typically has first and second materials having different textures. For example, the second fluid material is relatively harder and the first fluid material is relatively softer.

The resulting laminated structure may be further enrobed or covered with a coating. The coating may be, for example, a chocolate, a fudge, and the like. In addition, the coating may be further covered with one or more toppings. Representative toppings include, but are not limited to sprinkles, crushed nuts, any of the inclusions listed above, or a combination thereof. The term "enrobing" as used herein means that the laminated structure is completely surrounded by the coating. For example, the laminated candy mass may be enrobed by dipping the laminated structure in a liquified coating. The term "covered" as used herein means that the laminated structure is covered by the coating. For example, the laminated candy mass may be covered by pouring a liquified coating over the laminated structure.

The term "about" as used herein should generally be understood to refer to both numbers in a range of numerals. Moreover, all numerical ranges herein should be understood to include each whole integer within the range.

### EXAMPLE

The invention is further defined by reference to the following example describing in detail the products of the present invention. The examples are representative, and should not be construed to limit the scope of the invention in any way.

### Example 1: Laminated Chocolate and Caramel Candy Bar

A laminated chocolate and caranmel candy can be prepared by coextruding a chocolate at a temperature of about 35°C (95°F) and a caramel at a temperature of about 43°C (110°F). The resulting laminated structure is run through bar slitters to make centers and the resulting centers can be enrobed in chocolate to make a final bar.

Although preferred embodiments of the invention have been illusttated in the foregoing Detailed Description, it will be understood that the invention is not limited to the embodiments disclosed, but is capable of numerous rearrangements and modifications of parts and elements. It will be understood that the chemical and/or mechanical details of each product design may be slightly different or modified by one of ordinary skill in the art without departing from the teachings of the present invention.

## Claims

1. A non-refrigerated laminated edible product comprising a plurality of strips layered upon each other, wherein each strip comprises at least one first fluid material interleaved between at least two layers of a second, different fluid material which completely surrounds the first fluid material, wherein the second fluid material flows at one temperature but solidifies at a lower temperature and neither the first fluid material nor the second fluid material is a hard candy mass.

2. A non-refrigerated laminated edible product according to claim 1 wherein both the first and second fluid materials comprise a fat-based confectionery material or a sugar-based confectionery material.

3. The non-refrigerated laminated edible product of claim 1, wherein the at least one first fluid material comprises a sticky or flowable mass having a moisture content of at least about 7 weight percent; and wherein the second fluid material is different from the first fluid and surrounds and encases the first fluid material.

4. The non-refrigerated laminated edible product of claim 3, wherein the sticky or flowable mass comprises at least one of jelly, caramel, fondant, paste, liquid, or a combination thereof.

5. The non-refrigerated laminated edible product of claim 3, wherein the sticky or flowable mass comprises a pectin-based jelly.

6. The non-refrigerated laminated edible product of claim 1 wherein at least some of the strips comprise a single first fluid material encased within a second fluid material.

7. The non-refrigerated laminated edible product of claim 1 wherein the first fluid material has a variable thickness or a plurality of first fluid materials are provided between the layers of the second fluid material.

8. The non-refrigerated laminated edible product of claim 1 wherein the strips are layered upon each other at an angle.

9. The non-refrigerated laminated edible product of claim 1 wherein the second fluid material is a fat based confectionery coating, such as a chocolate or compound coating, and the first fluid material is a jelly, nougat, fondant, nut paste, chocolate paste, fat cream, caramel, fudge, flour based paste, cookie dough, marshmallow, or a liquid.

10. The non-refrigerated laminated edible product of claim 1 wherein the first fluid material or the second fluid material further comprise one or more inclusions.

11. The non-refrigerated laminated edible product of claim 10, wherein the inclusions are selected from the group consisting of cereals; grains; nuts; pieces of fruit ; jelly pieces; pieces of wafers, cookies, or biscuits; candy pieces, and mixtures thereof, and have dimensions that are from about 0.5mm to 6.5mm (0.02 to 0.25 inches).

12. The non-refrigerated laminated edible product of claim 1 wherein the first fluid material or the second fluid material further comprises one or more colorings or flavorings,

13. The non-refrigerated laminated edible product of claim 1 further comprising a coating that surrounds or covers the laminated structure, such as a chocolate or fudge coating, optionally covered with one or more toppings.

14. The non-refrigerated laminated edible product of claim 13, wherein the topping comprises one or more of sprinkles; nuts; cereals; grains; pieces of fruit; jelly pieces; pieces of wafers, cookies, or biscuits; and candy pieces.

15. The non-refrigerated laminated edible product of claim 1 comprising a plurality of first fluid materials, wherein one of the first fluid materials is layered on top of another first fluid material to form a multi-layered strip of first fluid materials, which strip is encased with the second fluid material layers.

16. The non-refrigerated laminated edible product of claim 1 wherein the thickness of the strips is between about 0.254mm and 3.2mm (1/100 and 1/8 inch).

17. The non-refrigerated laminated edible product of claim 1 wherein about 2 to 500 strips are superimposed to form the product and the moisture content is greater than about 8 weight percent.

18. The non-refrigerated laminated edible product of claim 1 wherein the layer of superimposed strips has a thickness of about 0.254mm to 101.6mm (0.01 to 4 inches).

19. The non-refrigerated laminated edible product of claim 1 wherein each strip comprises at least one first fluid material comprising a sticky or flowable mass having a Brix content of less than about 83°, and at least two layers of a second, different fluid material which completely surrounds and encases the first fluid material,

20. A method of producing a non-refrigerated laminated edible product comprising depositing in each of a plurality of molds a first plurality of layers of at least one first fluid material interleaved between a second plurality of layers of a second fluid material that flows at one temperature but solidifies at a lower temperature; and coating a portion of the first and second plurality of layers in each mold with an edible material to form the laminated edible product, wherein neither the first fluid material nor the second fluid material is a hard candy mass.

21. The method of claim 20 wherein at least one of the first fluid material and the second fluid material has a moisture content of greater than about 7 percent by weight,

22. The method of claim 20 wherein the edible material comprises the second fluid material.

23. The method of claim 20 wherein the first fluid material comprises jelly and wherein the second fluid material comprises fat-based confectionery material, sugar based confectionery paste, or both.

24. The method of claim 20 wherein the second fluid material comprises chocolate, a compound coating, or both.

25. The method of claim 20 wherein the edible material comprises at least one chocolate that completely surrounds the first fluid material.

26. The method of claim 20 wherein the first and second plurality of layers are disposed at an angle relative to each other.

27. The method of claim 20 wherein the second fluid material solidifies at a temperature of about 30°C.

## Patentansprüche

1. Ein nicht-gekühltes laminiertes essbares Produkt mit einer Vielzahl von Streifen, die schichtweise aufeinander angeordnet sind, wobei jeder Streifen wenigstens ein erstes fluides Material aufweist, das blattartig zwischen wenigstens zwei Schichten eines zweiten, anderen fluiden Materials, das das erste fluide Material vollständig umgibt, eingeschoben ist, wobei das zweite fluide Material bei einer Temperatur fließt, sich jedoch bei einer niedrigeren Temperatur verfestigt, und wobei weder das erste fluide Material noch das zweite fluide Material eine Hartkaramellenmasse ist.

2. Nicht-gekühltes laminiertes essbares Produkt nach Anspruch 1, wobei sowohl das erste als auch das zweite fluide Material ein Süßwarenmaterial auf Fettbasis oder ein Süßwarenmaterial auf Zuckerbasis umfassen.

3. Nicht-gekühltes laminiertes essbares Produkt nach Anspruch 1, wobei das wenigstens eine erste fluide Material eine klebrige oder fließfähige Masse umfasst, die einen Feuchtigkeitsgehalt von wenigstens etwa 7 Gew.-% aufweist, und wobei sich das zweite fließfähige Material von dem ersten Fluid unterscheidet und das erste fließfähige Material umgibt und einhüllt.

4. Nicht-gekühltes laminiertes essbares Produkt nach Anspruch 3, wobei die klebrige oder fließfähige Masse wenigstens eines von einem Gelee, Karamel, Fondant, einer Paste, Flüssigkeit oder einer Kombination daraus umfasst.

5. Nicht-gekühltes laminiertes essbares Produkt nach Anspruch 3, wobei die klebrige oder fließfähige Masse ein Gelee auf Pektinbasis umfasst.

6. Nicht-gekühltes laminiertes essbares Produkt nach Anspruch 1, wobei wenigstens einer der Streifen ein einziges erstes fluides Material umfasst, das von einem zweiten fluiden Material umhüllt ist.

7. Nicht-gekühltes laminiertes essbares Produkt nach Anspruch 1, wobei das erste fluide Material eine variable Dicke aufweist oder wobei eine Vielzahl von ersten fluiden Materialien zwischen den Schichten des zweiten fluiden Materials vorgesehen sind.

8. Nicht-gekühltes laminiertes essbares Produkt nach Anspruch 1, wobei die Streifen unter einem gegenseitigen Winkel schichtförmig aufeinander angeordnet sind.

9. Nicht-gekühltes laminiertes essbares Produkt nach Anspruch 1, wobei das zweite fließfähige Material ein Süßwarenüberzug auf Fettbasis ist, wie beispielsweise ein Schokoladen- oder Compound-Überzug, und das erste fließfähige Material ein Gelee, Nougat, Fondant, eine Nusspaste, Schokoladenpaste, Fettcreme, Karamel, Fudge, eine Paste auf Mehlbasis, Plätzchenteig, Marshmallow oder eine Flüssigkeit ist.

10. Nicht-gekühltes laminiertes essbares Produkt nach Anspruch 1, wobei das erste fluide Material oder das zweite fluide Material außerdem einen oder mehrere Einschlüsse umfassen.

11. Nicht-gekühltes laminiertes essbares Produkt nach Anspruch 10, wobei die Einschlüsse aus der Gruppe ausgewählt sind, die besieht aus Cerealien, Körnern, Nüssen, Fruchtstücken, Geleestücken, Waffelstücken, Plätzchen oder Gebäck, Bonbonstücken und Mischungen davon, und Abmessungen aufweisen, die von etwa 0,5 mm bis 6,5 mm (0,02 bis 0,25 inches) betragen.

12. Nicht-gekühltes laminiertes essbares Produkt nach Anspruch 1, wobei das erste fluide Material oder das zweite fluide Material außerdem eines oder mehrere von Färbemitteln oder Aromatisierungsmitteln umfassen.

13. Nicht-gekühltes laminiertes essbares Produkt nach Anspruch 1, das außerdem einen Überzug umfasst, der die laminierte Struktur umgibt oder bedeckt, wie beispielsweise einen Schokoladen- oder Fudge-Überzug, der ggf. mit einem oder mehreren Toppings bedeckt ist.

14. Nicht-gekühltes laminiertes essbares Produkt nach Anspruch 13, wobei das Topping eines oder mehrere von Sprinkles, Nüssen, Cerealien, Körnern, Fruchtstücken, Geleestücken, Waffelstücken, Plätzchen oder Gebäck und Bonbonstücken umfasst.

15. Nicht-gekühltes laminiertes essbares produkt nach Anspruch 1, das eine Vielzahl von ersten fluiden Materialien umfasst, wobei eines der ersten fluiden Materialien schichtförmig auf einem anderen ersten fluiden Material angeordnet ist, so dass ein mehrschichtiger Streifen aus ersten fluiden Materialien gebildet wird, wobei dieser Streifen von Schichten des zweiten fluiden Materials umhüllt ist.

16. Nicht-gekühltes laminiertes essbares Produkt nach Anspruch 1, wobei die Dicke der Streifen zwischen etwa 0,254 mm und 3,2 mm (1/100 und 1/8 inch) liegt.

17. Nicht-gekühltes laminiertes essbares Produkt nach Anspruch 1, wobei etwa 2 bis 500 Streifen aufeinander angeordnet sind, um das Produkt zu bilden, und der Feuchtigkeitsgehalt bei mehr als etwa 8 Gew.-% liegt.

18. Nicht-gekühltes laminiertes essbares Produkt nach Anspruch 1, wobei die Schicht von übereinanderliegenden Streifen eine Dicke von etwa 0,254 mm bis 101,6 mm (0,01 bis 4 inches) aufweist.

19. Nicht-gekühltes laminiertes essbares Produkt nach Anspruch 1, wobei jeder Streifen wenigstens ein erstes fluides Material umfasst, das eine klebrige oder fließfähige Masse mit einem Brix-Gehalt von weniger als etwa 83° aufweist, und wenigstens zwei Schichten eines zweiten, unterschiedlichen fluiden Materials, das das erste fluide Material vollständig umgibt und einhüllt.

20. Verfahren zur Herstellung eines nicht-gekühltes laminierten essbaren Produkts, das das Ablegen jeweils in jeder von einer Vielzahl von Formen einer ersten Vielzahl von Schichten aus wenigstens einem ersten fluiden Material, zwischen denen blattartig eine zweite Vielzahl von Schichten eines zweites fluiden Materials, das bei einer Temperatur fließt, sich jedoch bei einer niedrigeren Temperatur verfestigt, angeordnet ist, und das Überziehen eines Teils der ersten und der zweiten Vielzahl von Schichten in jeder Form mit einem essbaren Material umfasst, um das laminierte essbare Produkt zu bilden, wobei weder das erste fluide Material noch das zweite fluide Material eine Hartkaramellenmasse ist.

21. Verfahren nach Anspruch 20, wobei wenigstens eines von dem ersten fluiden Material und dem zweiten fluiden Material einen Feuchtigkeitsgehalt aufweist, der über etwa 7 Gew.-% liegt.

22. Verfahren nach Anspruch 20, wobei das essbare Material das zweite fluide Material umfasst.

23. Verfahren nach Anspruch 20, wobei das erste fluide Material ein Gelee umfasst und wobei das zweite fluide Material ein Süßwarenmaterial auf Fettbasis, eine Süßwarenpaste auf Zuckerbasis oder beides umfasst.

24. Verfahren nach Anspruch 20, wobei das zweite fluide Material Schokolade, einen Compound-Überzug oder beides umfasst.

25. Verfahren nach Anspruch 20, wobei das essbare Material wenigstens eine Schokolade umfasst, die das erste fließfähige Material vollständig umgibt.

26. Verfahren nach Anspruch 20, wobei die erste und die zweite Vielzahl von Schichten relativ zueinander unter einem Winkel angeordnet sind.

27. Verfahren nach Anspruch 20, wobei das zweite fließfähige Material sich bei einer Temperatur von etwa 30 °C verfestigt.

## Revendications

1. Produit comestible stratifié non réfrigéré comprenant une pluralité de bandes stratifiées les unes sur les autres, dans lequel chaque bande comprend au moins une première matière fluide interposée entre au moins deux couches d'une deuxième matière fluide différente qui entoure complètement la première matière fluide, dans lequel la deuxième matière fluide est liquide à une température mais se solidifie à une température inférieure, et ni la première matière fluide, ni la deuxième matière fluide ne sont une masse de bonbon dur.

2. Produit comestible stratifié non réfrigéré selon la revendication 1, dans lequel les première et deuxième matières fluides comprennent une matière de confiserie à base de matière grasse ou une matière de confiserie à base de sucre.

3. Produit comestible stratifié non réfrigéré selon la revendication 1, dans lequel l'au moins une première matière fluide comprend une masse collante ou liquide ayant une teneur en humidité d'au moins environ 7 pour cent en poids ; et dans lequel la deuxième matière fluide est différente de la première matière fluide et entoure et enrobe la première matière fluide.

4. Produit comestible stratifié non réfrigéré selon la revendication 3, dans lequel la masse collante ou liquide comprend au moins l'un d'une gelée, d'un caramel, d'un fondant, d'une pâte, d'un liquide ou une combinaison de ceux-ci.

5. Produit comestible stratifié non réfrigéré selon la revendication 3, dans lequel la masse collante ou liquide comprend une gelée à base de pectine.

6. Produit comestible stratifié non réfrigéré selon la revendication 1, dans lequel au moins certaines des bandes comprennent une seule première matière fluide enfermée dans une deuxième matière fluide.

7. Produit comestible stratifié non réfrigéré selon la revendication 1, dans lequel la première matière fluide a une épaisseur variable ou une pluralité de premières matières fluides est disposée entre les couches de la deuxième matière fluide.

8. Produit comestible stratifié non réfrigéré selon la revendication 1, dans lequel les bandes sont stratifiées les unes sur les autres au niveau d'un angle.

9. Produit comestible stratifié non réfrigéré selon la revendication 1, dans lequel la deuxième matière fluide est un enrobage de confiserie à base de matière grasse, tel qu'un enrobage de chocolat ou un enrobage composé, et la première matière fluide est une gelée, un nougat, un fondant, une pâte aux noisettes, une pâte au chocolat, une crème grasse, un caramel, un fudge, une pâte à base de farine, une pâte à cookies, une guimauve ou un liquide.

10. Produit comestible stratifié non réfrigéré selon la revendication 1, dans lequel la première matière fluide ou la deuxième matière fluide comprend en outre une ou plusieurs inclusions.

11. Produit comestible stratifié non réfrigéré selon la revendication 10, dans lequel les inclusions sont choisies dans le groupe constitué par les céréales ; les graines ; les noisettes ; les morceaux de fruits ; les morceaux de gelée ; les morceaux de gaufrettes, de cookies ou de biscuits ; les morceaux de bonbons, et les mélanges de ceux-ci, et ont des dimensions allant d'environ 0,5 mm à 6,5 mm (0,02 à 0,25 pouce).

12. Produit comestible stratifié non réfrigéré selon la revendication 1, dans lequel la première matière fluide ou la deuxième matière fluide comprend en outre un ou plusieurs colorants ou arômes.

13. Produit comestible stratifié non réfrigéré selon la revendication 1, comprenant en outre un enrobage qui entoure ou recouvre la structure stratifiée, tel qu'un enrobage de chocolat ou de fudge, facultativement recouvert d'un ou plusieurs fourrages.

14. Produit comestible stratifié non réfrigéré selon la revendication 13, dans lequel le fourrage comprend un ou plusieurs de copeaux ; noisettes ; céréales ; graines ; morceaux de fruits ; morceaux de gelée ; morceaux de gaufrettes, de cookies ou de biscuits ; et morceaux de bonbons.

15. Produit comestible stratifié non réfrigéré selon la revendication 1, comprenant une pluralité de premières matières fluides, dans lequel l'une des premières matières fluides est stratifiée au-dessus d'une autre première matière fluide pour former une bande multicouche de premières matières fluides, laquelle bande est enrobée par les couches de deuxième matière fluide.

16. Produit comestible stratifié non réfrigéré selon la revendication 1, dans lequel l'épaisseur des bandes est comprise entre environ 0,254 mm et 3,2 mm (1/100 et 1/8 de pouce).

17. Produit comestible stratifié non réfrigéré selon la revendication 1, dans lequel environ 2 à 500 bandes sont superposées pour former le produit et la teneur en humidité est supérieure à environ 8 pour cent en poids.

18. Produit comestible stratifié non réfrigéré selon la revendication 1, dans lequel la couche de bandes superposées a une épaisseur d'environ 0,254 mm à 101,6 mm (0,01 à 4 pouces).

19. Produit comestible stratifié non réfrigéré selon la revendication 1, dans lequel chaque bande comprend au moins une première matière fluide comprenant une masse collante ou liquide ayant une teneur Brix de moins d'environ 83°, et au moins deux couches d'une deuxième matière fluide différente qui entoure et enrobe complètement la première matière fluide.

20. Procédé de production d'un produit comestible stratifié non réfrigéré comprenant le dépôt dans chacun d'une pluralité de moules d'une première pluralité de couches d'au moins une première matière fluide intercalée entre une deuxième pluralité de couches d'une deuxième matière fluide qui est liquide à une température mais se solidifie à une température inférieure ; et l'enrobage d'une portion des première et deuxième pluralités de couches dans chaque moule avec une matière comestible pour former le produit comestible stratifié, dans lequel ni la première matière fluide, ni la deuxième matière fluide ne sont une masse de bonbon dur.

21. Procédé selon la revendication 20, dans lequel au moins l'une de la première matière fluide et de la deuxième matière fluide a une teneur en humidité supérieure à environ 7 pour cent en poids.

22. Procédé selon la revendication 20, dans lequel la matière comestible comprend la deuxième matière fluide.

23. Procédé selon la revendication 20, dans lequel la première matière fluide comprend de la gelée, et dans lequel la deuxième matière fluide comprend une matière de confiserie à base de matière grasse, une pâte de confiserie à base de sucre, ou les deux.

24. Procédé selon la revendication 20, dans lequel la deuxième matière fluide comprend un enrobage de chocolat, un enrobage composé, ou les deux.

25. Procédé selon la revendication 20, dans lequel la matière comestible comprend au moins un chocolat qui entoure complètement la première matière fluide.

26. Procédé selon la revendication 20, dans lequel les première et deuxième pluralités de couches sont disposées à un angle l'une par rapport à l'autre.

27. Procédé selon la revendication 20, dans lequel la deuxième matière fluide se solidifie à une température d'environ 30°C.
